# EUROPEAN PATENT SPECIFICATION

(11) **EP 3 204 238 B1**
(45) Date of publication and mention of the grant of the patent: **12.12.2018**
(21) Application number: 15822986.4
(22) Date of filing: 05.10.2015
(51) Int. Cl.: B60B 11/02, B62D 49/06

(54) **MOTORIZED FARM VEHICLE AND METHOD FOR USING SUCH A VEHICLE**
MOTORISIERTES LANDWIRTSCHAFTLICHES FAHRZEUG UND VERFAHREN ZUR VERWENDUNG SOLCH EINES FAHRZEUGS
VÉHICULE AGRICOLE MOTORISÉ ET PROCÉDÉ D'UTILISATION D'UN TEL VÉHICULE

(30) Priority: 07.10.2014 NL 2013591
(43) Date of publication of application: 16.08.2017
(73) Proprietor: MODUS S.À.R.L., 8399 Windhof (Koerich) (LU)
(72) Inventor: PEETERS, Daniel Petrus Marie, 2920 Nieuwmoer-Kalmthout (BE)
(74) Representative: Algemeen Octrooi- en Merkenbureau B.V.
(86) International application number: PCT/IB2015/002028
(87) International publication number: WO 2016/055854

(56) References cited:
- WO-A1-2013/171352
- US-A- 2 751 959

## Description

The present invention relates to a motorized farm vehicle and in particular to a motorized farm vehicle for drawing farming machines, such as a tractor, the farm vehicle comprising a frame, a driving motor, wheels on the same wheel axis, which are driven by the driving motor in use, which wheels define a nominal vehicle width between the outer sides thereof, and additional wheels for a twin wheel configuration with said wheels, in which twin wheel configuration the farm vehicle has an increased vehicle width in relation to the nominal vehicle width, the vehicle further comprising coupling means for coupling the wheels and the respective associated additional wheels in the twin wheel configuration for being jointly rotated by the driving motor.

A known tractor, being a farm vehicle as described in the introduction, has rear wheels driven by a combustion engine. By coupling an additional wheel to each one of the rear wheels, a twin wheel configuration of the rear wheels is obtained.

A twin wheel configuration means that an additional wheel is coupled to each one of two wheels on the same wheel axis, as is for example the case with the rear wheels of the aforesaid known tractor, for being jointly rotated by a driving motor of the vehicle. The additional wheel is in that case not driven directly but indirectly, via the associated wheel, as a result of the presence of the coupling means between the respective associated wheel and the additional wheel. In use of the vehicle, the coupled wheel and additional wheel thus behave as a single, wider wheel, as it were, usually having a width of about twice that of the wheel. As a result, the load-bearing capacity and the available traction of the vehicle will increase and the wheel pressure on a soft surface will be lower in use, so that the vehicle can be used more effectively in particular on the land, as is the case during farming work. A drawback of the twin wheel configuration is that the farm vehicle will have so large a width that it imposes limitations on the vehicle as regards being driven on public roads.

It is therefore an object of the present invention to provide a motorized farm vehicle which can be used in an effective and efficient manner on public roads as well as on the land.

The above object is achieved with the motorized farm vehicle according to the present invention, which is characterised by manipulation means for the additional wheels, which manipulation wheels are connected to the frame, and which are configured to move the additional wheels between a passive position, in which the respective additional wheels are clear of the wheels and are at least largely positioned within the nominal vehicle width, seen in the transverse direction of the farm vehicle, and an active position, in which each one of the additional wheels is coupled to an associated wheel via the coupling means in the twin wheel configuration.

By using the manipulation means, which are installed on the farm vehicle itself, the twin wheel configuration can be effected and terminated in an efficient manner without additional equipment, such as a mobile crane, and/or more than one individuals being needed. In use of the farm vehicle, the additional wheels can thus be moved from the inactive position to the active position upon driving onto a field, for example, in which active position the additional wheels can be coupled to the respective associated wheels either manually or in an automated manner. Following this, the required work can be carried out with the farm vehicle. When the twin wheel configuration is no longer needed or desired, the additional wheels can be moved to their passive position in a simple, efficient manner using the manipulation means. The farm vehicle will thus no longer have the increased vehicle width, at least at the location of the wheels, so that driving the vehicle on public roads will be easier or, under the applicable regulations regarding maximum vehicle width, only be allowed in that configuration.

In the vehicle according to the invention, the manipulation means can be of simple and light construction, since the manipulation means are configured for manipulation between the inactive position and the active position, in which active position the additional wheels are coupled to the wheels, so that forces will not necessarily be transmitted from the additional wheels to the frame via the manipulation means during twin wheel use of the vehicle. Consequently, the manipulation means only need to be configured to support the weight of the additional wheels during movement thereof between the active position and the inactive position.

Within the scope of the present invention, the phrase "at least largely within the normal vehicle width" is understood to mean that an additional wheel is positioned within the boundary of the nominal vehicle width as determined by the outer side of the associated wheel, more specifically the tyre thereof, over at least half its width, seen in the transverse direction of the wheel in question, more specifically the width of the tyre of said wheel. Preferably, the wheels are positioned within the nominal vehicle width over at least 75% of their width, more preferably the wheels are positioned entirely within the nominal vehicle width in the inactive position.

In an advantageous preferred embodiment, the manipulation means are configured to move the additional wheels between the passive position and the active position thereof in an automated manner. Preferably, the manipulation means are hydraulically driven in that case. It is furthermore advantageous if the farm vehicle comprises an operating element connected to a hydraulic drive unit, such as an operating knob disposed in a driver's cabin of the vehicle, which can be operated by a driver of the vehicle for moving the additional wheels to and from the active position.

It is very advantageous if the additional wheels are suspended from the manipulation means in the passive position. In this way an additional operation, for example by a driver of the vehicle, is not required once the additional wheels have been moved from the active position to the inactive position.

It is furthermore advantageous if the additional wheels can be detached from the manipulation means, at least in the active position. This makes it possible to move the manipulation means clear of the wheels once the additional wheels are coupled to the wheels in the twin wheel configuration, for example to the position the additional wheels would take up in the inactive position thereof. The manipulation means will thus be less vulnerable during use of the vehicle.

In an advantageous embodiment, the manipulation means are connected to the frame on the rear side of the farm vehicle, between the wheels. The wheels are the rear wheels of the farm vehicle in that case.

It is advantageous if the manipulation means are configured to position the additional wheels higher than the wheels, preferably in their entirety, in the passive position of the additional wheels. In such a position the additional wheels will not interfere with the useful use of the vehicle, or at least to a very minor extent, for many kinds of farm vehicles.

It is furthermore advantageous if the farm vehicle comprises a driver's cabin, wherein the manipulation means are configured to position the additional wheels behind, preferably directly behind, the driver's cabin in the passive position of the additional wheels.

In a very advantageous embodiment the manipulation means are configured to move the additional wheels from the passive position to the active position thereof via a pivoting movement, preferably about a pivot axis through a pivoting range of between 135 degrees, preferably 160 degrees, and 200 degrees, preferably about 180 degrees. This means that in the case of a pivoting movement of about 180 degrees, the additional wheels will pivot from a vertical position in the aforesaid active position in the twin wheel configuration to a likewise at least substantially vertical, albeit "upside down" position in the aforesaid inactive position. Quite preferably, the pivot axis extends in a vertical plane parallel to the longitudinal direction of the vehicle, which longitudinal direction is the same as the direction of movement straight ahead of the vehicle. The additional wheels in this case make a pivoting movement transversely to the longitudinal direction of the vehicle, therefore. For the sake of completeness it is noted that with a vehicle such as the farm vehicle according to the invention, a horizontal plane is defined by the points of contact between the wheels and the ground surface, and that a vertical plane is perpendicular thereto, and thus for example extends parallel to a plane through an outer side of a wheel of the vehicle in the case of the vehicle according to the invention.

It is furthermore very advantageous if the manipulation means comprise a left-hand manipulation element for manipulating a left-hand additional wheel of the additional wheels for coupling said wheel to a left-hand wheel of the wheels of the farm vehicle in a twin wheel configuration, and a right-hand manipulation element for manipulating a right-hand additional wheel of the additional wheels for coupling said wheel to a right-hand wheel of the wheels of the farm vehicle in a twin wheel configuration.

It is advantageous in that case if the left-hand manipulation element and the right-hand manipulation element each comprise a first arm that is rigidly (and detachably in an embodiment) connected to the frame, and a pivotable second arm, which second arm is connected at a first end thereof to a free end of the first arm via a hinge that defines a pivot axis, and which comprises a coupling element at a second end thereof for being coupled to the associated additional wheel. In one embodiment the coupling element is configured to engage, quite preferably rotatably, a hub of the additional wheel, but in another embodiment it may be configured to engage a rim of the additional wheel, for example in the case of a hubless additional wheel that is configured to be coupled to the associated wheel via its rim.

It is advantageous in that case if the free end of the first arm of each one of the first and the second manipulation element is located at an angle above and rearward of the associated wheel, seen in the direction of movement, and if the second arm is substantially L-shaped and substantially follows the contour of the associated wheel along the outer side, i.e. in use of the additional wheel in the twin wheel configuration, and the tread thereof. In this way constructionally very simple and thus cost-advantageous manipulation means are obtained, by means of which in particular the pivoting movement about the pivot axis at the location of the connection between the first and the second arm can be carried out in an effective manner.

With such a construction in combination with hydraulic drive of the manipulation means it is advantageous if the hydraulic drive system comprises a hydraulic cylinder for each manipulation element, wherein a free end of one of the piston rod and the cylinder is connected to the frame, whether or not via the first arm, and the other of the piston rod and the cylinder is connected to the second arm. Preferably, the connection with the second arm is realised via an arm part that extends away from the second arm. Said part of the second arm preferably extends laterally outward in substantially horizontal direction at the location of the first end thereof in the active position, wherein the associated hydraulic cylinder is located at practically the same vertical level with its end connected to the frame as the aforesaid part of the second arm, wherein the opposite free end of the hydraulic cylinder is connected to an arm part that extends upward from the aforesaid part of the second arm. This makes it possible to realise a torque on the second arm for effecting the pivoting movement about the pivot axis.

Preferably, the first and the second manipulation element are provided on the farm vehicle in an at least substantially mirror-symmetrical arrangement relative to a central longitudinal vehicle axis.

The driving motor is preferably a combustion engine.

The wheels are preferably rear wheels of the farm vehicle. The farm vehicle may further comprise one or more front wheels which may or may not be steered and which may or may not be driven, preferably steered and not driven. Alternatively, the wheels are front wheels and the farm vehicle further comprises one or more rear wheels which may or may not be steered and which may or may not be driven, preferably steered and not driven.

The invention further relates to a method for using a farm vehicle according to the present invention, wherein additional wheels are moved from the inactive position to the active position thereof, using the manipulation means, in a first mode of use of the farm vehicle so as to thus realise the twin wheel configuration with the wheels,
after which the additional wheels are coupled to the wheels using the coupling means,
and wherein in a subsequent second mode of use the coupling via the coupling means between the additional wheels and the wheels is released, whereupon the additional wheels are moved from the active position to the passive position using the manipulation means.

Preferably the method comprises the step to be carried out during the first mode of use of disconnecting the manipulation means from the additional wheels once the additional wheels are operatively connected to the wheels and returning the manipulation means to the position in which the additional wheels would take up the inactive position thereof if they would still be connected to the manipulation means.

Advantages of the method according to the present invention are analogous to the above-described advantages of the farm vehicle according to the invention.

The present invention will now be explained in more detail by means of a description of various preferred embodiments of a farm vehicle and a method for using such a farm vehicle according to the invention, in which reference is made to the following schematic figures, in which:
Figure 1 is a three-dimensional view of a first preferred embodiment of a part of a farm vehicle according to the present invention with additional rear wheels in a passive position thereof;
Figure 2 is a three-dimensional view of the farm vehicle of figure 1 with the additional wheels in an active position thereof;
Figure 3 is a side view of the vehicle of figure 1;
Figure 4 is a side view of the vehicle of figure 2;
Figure 5 is a rear view of the vehicle of figure 1;
Figure 6 is a rear view of the vehicle of figure 2;
Figure 7 is another three-dimensional view, at an angle from behind, of the vehicle of figure 2; and
Figure 8 is a three-dimensional view of another preferred embodiment of a farm vehicle according to the present invention with additional wheels in an active position thereof.

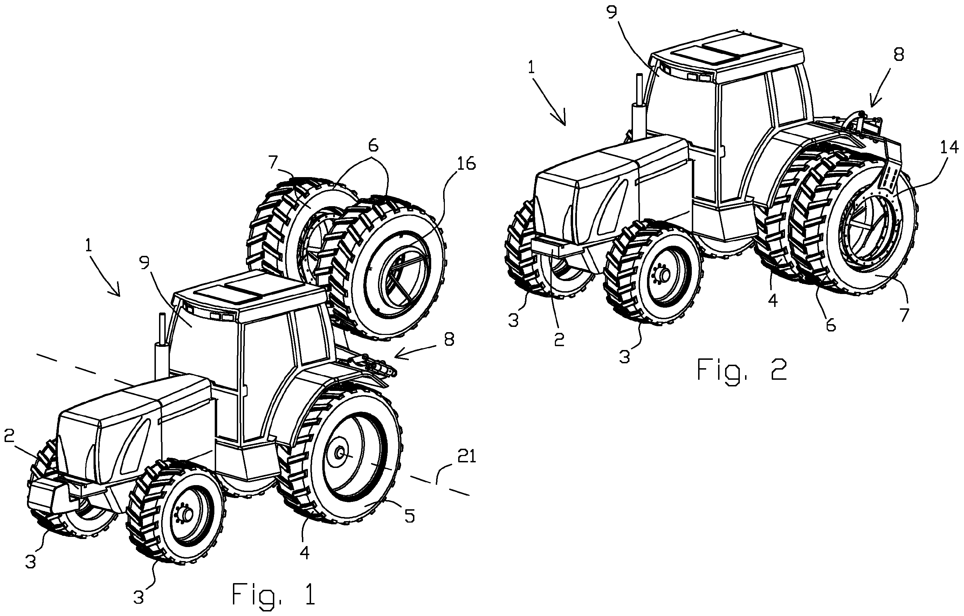

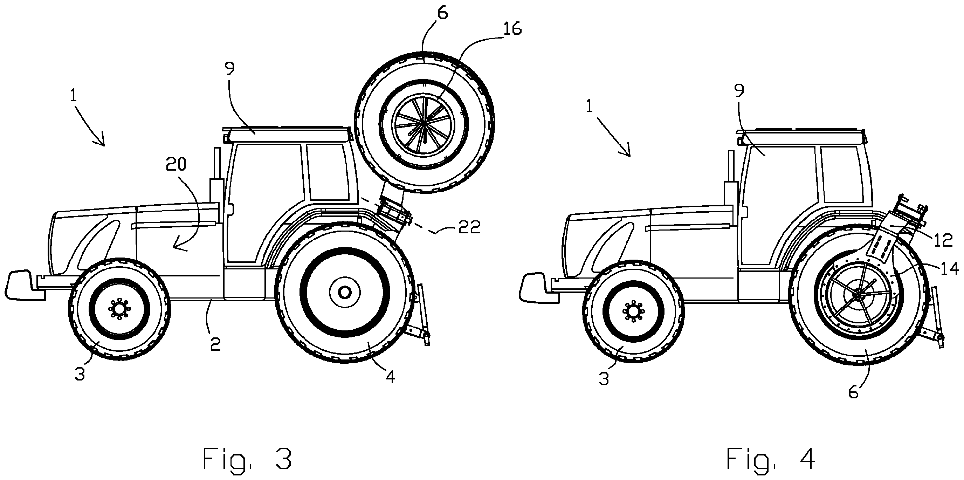

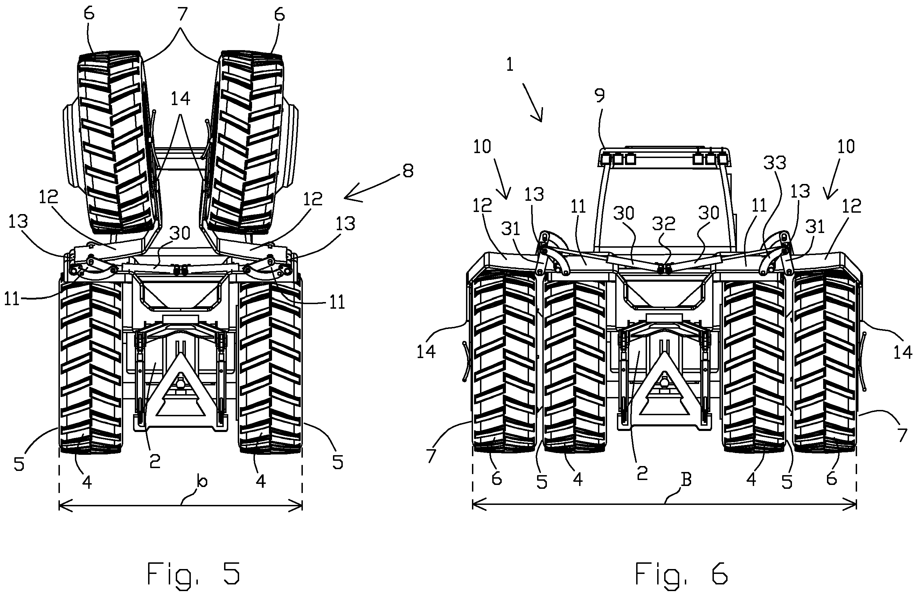

The tractor 1 shown in figures 1-7 as a preferred embodiment of a motorized farm vehicle according to the invention comprises a frame 2, front wheels 3, a driver's cabin 9 and a driving motor in the form of a combustion engine 20 installed under a bonnet. The combustion engine drives rear wheels 4 on a common axis 21. The rear wheels 4 thus driven define a nominal vehicle width b that corresponds to the distance between the outer sides 5 of the two rear wheels 4. The tractor 1 is further provided with additional rear wheels 6. Said additional rear wheels 6 are shown in figures 2, 4 a 6 in a so-called twin wheel configuration, in which the tractor has an increased vehicle width B, in relation to the nominal vehicle width b, which is defined by the outer sides 7 of the additional rear wheels 6.

It is noted that the nominal vehicle width b is the required effective width of an area on which the tractor is supported on a ground surface. In general it is conceivable that the nominal vehicle width b has been determined at another location on the vehicle than the location of the wheels on which the twin wheel configuration with the additional wheels is used. It is conceivable, therefore, that the nominal vehicle width of a tractor comparable to the tractor 1 is determined by the front wheels.

The vehicle 1 further comprises manipulation means 8 connected to the frame 2. The manipulation means 8 comprise a manipulation element 10 for each additional wheel 6, which manipulation elements are each capable of moving an additional rear wheel 6 from a passive position as shown in figures 1, 3 and 5 to an active position as shown in figures 2, 4 and 6. The manipulation elements 10 pivot the wheels 6 through an angle of about 175 degrees about a respective pivot axis 22 defined by hinges 13 of each one of the elements 10. The pivot axis extends in a vertical plane parallel to the longitudinal direction of the vehicle 1, so that the wheels 6 make a pivoting movement in the transverse direction of the vehicle. The wheels thus move outward from the active position to a horizontal position thereof and subsequently inward again and upward to a substantially vertical position, in which the wheels are positioned upside-down and the outer sides of the wheels 6 now face inward toward each other.

In the passive position, the additional rear wheels 6 are clear of the rear wheels 4 and are suspended from the manipulation elements 10. In this passive position the additional rear wheels 6 are located entirely within the nominal width b of the tractor. Alternatively, the wheels 6 may be positioned at least largely within the nominal width b in the passive position, more specifically at an angle behind and above the rear wheels 4 and behind the driver's cabin 9.

In the active position, each additional real 6 is connected to a rear wheel 4, the so-called twin wheel configuration. Although in the illustrated embodiment the manipulation means 8 are rotatably connected to the rear wheels 6 via a coupling element 14 in the twin wheel configuration, the manipulation means 8 can be detached from the rear wheels 6. The manipulation means 8 can thus be in the passive position, or at least the position thereof with the wheels 6 in the passive position, during the twin wheel configuration. The manipulation means 8 are connected to the frame 2 on the rear side of the tractor 1, between the rear wheels 4.

Each one of the two manipulation elements 10 is connected to a rear wheel 6. The manipulation element 10 has a first arm 11 which is rigidly connected to the frame 2 and a second arm 12 which can pivot relative to the first arm 11, to which second arm the wheel 6 is connected. The second arm 12 is connected to the first arm 11 at a first end by means of a hinge 13 which defines a pivot axis 22. The second arm 12 can pivot through an angle of about 175 degrees relative to the first arm 11. The vehicle 1 is provided with a hydraulic device yet to be described in more detail below, by means of which the manipulation means 8 are operated. Actuation of the means 8 by means of an electric motor, for example, or via a shaft connected to the driving motor is also possible. The first arm 11 of the manipulation element 10 is positioned above the rear wheel 4 with a free end thereof, to which free end the additional wheel 6 to be manipulated can be connected. The first arm 11 takes up a horizontal position, slightly behind the drive shaft of the wheel 4, seen in the driving direction. The second arm 12 is substantially L-shaped and largely follows the contour of the associated additional rear wheel 6. The tread and the inner side wall of the wheels 6 are free from contact with the second arm 12 so as to enable the wheels 6 to rotate freely relative to the second arm 12. On a second end of the second arm 12, the aforesaid coupling element 14 is provided in the form of a turntable bearing. Said coupling element 14 is configured for being coupled to the rim of the wheel 6 and makes it possible to effect a rotary connection of a rear wheel 6 on the associated manipulation element 10. In the active position, in the twin wheel configuration, the additional wheel 6 is coupled to the associated wheel 4 via coupling means, in this embodiment made up of a star 16 as known to the skilled person.

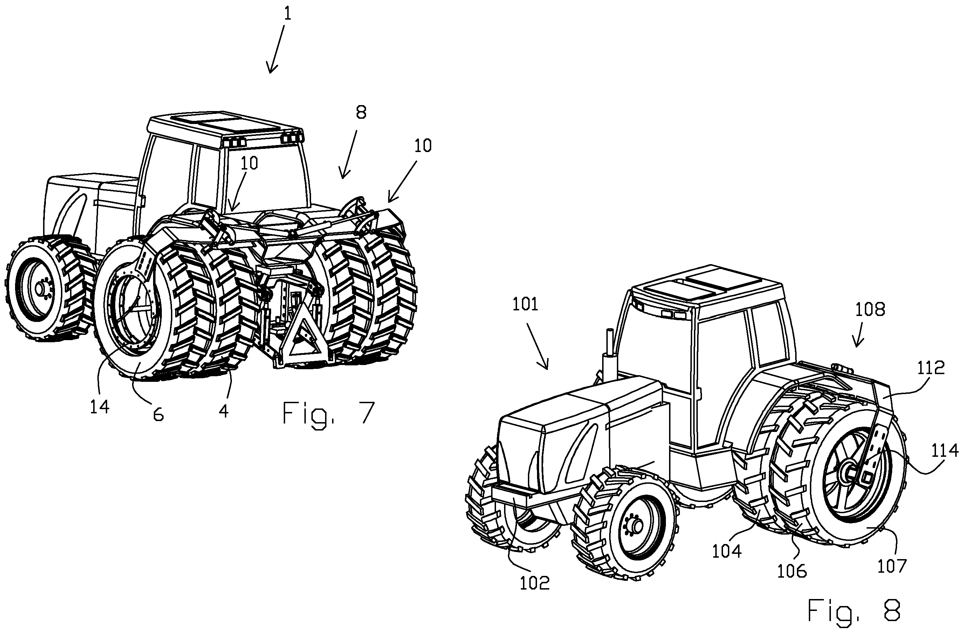

The first arm 11 and the second arm 12 of each one of the manipulation elements 10 of the manipulation means 8 of the tractor 1 can be pivoted relative to each other about the hinge 19 using a hydraulic cylinder 30 that can be actuated by means of a pressurised hydraulic medium. Such a hydraulic cylinder can be used in the same manner with the manipulation elements 110 of the tractor 101 shown in figure 8 (yet to be described below). The hydraulic cylinder 30 is pivotally connected to the frame 2 with a first free end 32 thereof, whilst a second, opposite free end is pivotally connected to an arm portion 31 that is connected to the second arm 12. As a result, the second arm 12 can be pivoted relative to the first arm 11 by retracting or extending the hydraulic cylinder 30. The arm portion 31 is pivotally connected to the second arm 12. A further arm portion 33 is rotatably connected to the free end of the arm portion 31, where also the second free end of the hydraulic cylinder 130 engages, which further arm portion 33 is furthermore pivotally connected to the first arm 11, near the hinge 13 at the free end of the first arm 11. This construction makes it possible for the pivoting movement to take place in an efficient manner.

Figure 8 shows a tractor 101, being another preferred embodiment of a farm vehicle according to the invention. The tractor 101 comprises manipulation means 108 comparable to the manipulation means 8. Corresponding parts of the tractor 101 and the tractor 1, or at least parts having the same function, are indicated by the same numerals augmented by 100. On the second arm 112 a coupling element 114 is provided, which coupling element comprises a shaft which engages the shaft of the additional wheel 106 or at least a coupling part provided thereon. The connection of the additional wheels 106 to the wheels 104 in the active position of the additional wheels 106 takes place in a manner that is known to the skilled person, using clamps and studs. The tractor 101 is thus identical to the tractor 1, with the exception of the configuration of the second arm 112 and the coupling element 114 provided thereon and the configuration of the additional wheels 106 and the wheels 104.

## Claims

1. A motorized farm vehicle comprising a frame, a driving motor, wheels on the same wheel axis, which are driven by the driving motor in use, which wheels define a nominal vehicle width between the outer sides thereof, and additional wheels for a twin wheel configuration with said wheels, in which twin wheel configuration the farm vehicle has an increased vehicle width in relation to the nominal vehicle width, the vehicle further comprising coupling means for coupling the wheels and the respective associated additional wheels in the twin wheel configuration for being jointly rotated by the driving motor, wherein the farm vehicle is **characterised by**
manipulation means for the additional wheels, which manipulation means are connected to the frame, and which are configured to move the additional wheels between a passive position, in which the respective additional wheels are clear of the wheels and are at least largely positioned within the nominal vehicle width, seen in the transverse direction of the farm vehicle, and an active position, in which each one of the additional wheels is coupled to an associated wheel via the coupling means in the twin wheel configuration.

2. A farm vehicle according to claim 1, wherein the manipulation means are configured to move the additional wheels between the passive position and the active position thereof in an automated manner.

3. A farm vehicle according to claim 1 or 2, wherein the additional wheels are suspended from the manipulation means in the passive position.

4. A farm vehicle according to any one of the preceding claims, wherein the additional wheels can be detached from the manipulation means at least in the active position.

5. A farm vehicle according to any one of the preceding claims, wherein the manipulation means are connected to the frame on the rear side of the farm vehicle, between the wheels.

6. A farm vehicle according to any one of the preceding claims, wherein the manipulation means are configured to position the additional wheels higher than the wheels, preferably in their entirety, in the passive position of the additional wheels.

7. A farm vehicle according to any one of the preceding claims, comprising a driver's cabin, wherein the manipulation means are configured to position the additional wheels behind, preferably directly behind, the driver's cabin in the passive position of the additional wheels.

8. A farm vehicle according to any one of the preceding claims, wherein the manipulation means are configured to move the additional wheels from the passive position to the active position thereof via a pivoting movement, wherein the manipulation means preferably are configured to move the additional wheels from the passive position to the active position thereof via a pivoting movement through a pivoting range of between 135 degrees and 200 degrees, further preferably about 180 degrees, wherein the pivot axis preferably extends in a vertical plane parallel to the longitudinal direction of the vehicle.

9. A farm vehicle according to any one of the preceding claims, wherein the manipulation means comprise a left-hand manipulation element for manipulating a left-hand additional wheel of the additional wheels for coupling said wheel to a left-hand wheel of the wheels of the farm vehicle in a twin wheel configuration, and a right-hand manipulation element for manipulating a right-hand additional wheel of the additional wheels for coupling said wheel to a right-hand wheel of the wheels of the farm vehicle in a twin wheel configuration.

10. A farm vehicle according to claim 9, wherein the left-hand manipulation element and the right-hand manipulation element each comprise a first arm that is rigidly connected to the frame, and a pivotable second arm, which second arm is connected at a first end thereof to a free end of the first arm via a hinge, and which comprises a coupling element at a second end thereof for being coupled to the associated additional wheel.

11. A farm vehicle according to claim 10, wherein the free end of the first arm of each one of the first and the second manipulation element is located at an angle above and rearward of the associated wheel, seen in the direction of movement, and wherein the second arm is substantially L-shaped and substantially follows the contour of the associated additional wheel along the outer side and the tread thereof.

12. A farm vehicle according to any one of the preceding claims, wherein the driving motor is a combustion engine.

13. A farm vehicle according to any one of the preceding claims, wherein the wheels form rear wheels of the farm vehicle, the farm vehicle further comprising non-driven, steerable front wheels.

14. A method for using a farm vehicle according to one or more of the preceding claims, wherein the additional wheels are moved from the inactive position to the active position thereof, using the manipulation means, in a first mode of use of the farm vehicle so as to thus realise the twin wheel configuration with the wheels, after which the additional wheels are coupled to the wheels using the coupling means, and wherein in a subsequent second mode of use the coupling via the coupling means between the additional wheels and the wheels is released, whereupon the additional wheels are moved from the active position to the passive position using the manipulation means.

15. A method according to claim 14, comprising the step to be carried out during the first mode of use of disconnecting the manipulation means from the additional wheels once the additional wheels are operatively connected to the wheels and returning the manipulation means to the position in which the additional wheels would take up the inactive position thereof if they would still be connected to the manipulation means.

## Patentansprüche

1. Motorisiertes Landwirtschaftsfahrzeug, umfassend einen Rahmen, einen Antriebsmotor, Räder auf derselben Radachse, die in Verwendung durch den Antriebsmotor angetrieben werden, wobei die Räder eine Nennfahrzeugbreite zwischen den Außenseiten davon definieren, und zusätzliche Räder für eine Zwillingsradkonfiguration mit den genannten Rädern, wobei das Landwirtschaftsfahrzeug in der Zwillingsradkonfiguration eine im Verhältnis zu der Nennfahrzeugbreite vergrößerte Fahrzeugbreite aufweist, wobei das Fahrzeug ferner Kopplungsmittel zum Koppeln der Räder und der jeweils zugehörigen zusätzlichen Räder in der Zwillingsradkonfiguration, um gemeinsam durch den Antriebsmotor gedreht zu werden, umfasst, wobei das Landwirtschaftsfahrzeug
**gekennzeichnet ist durch**
Manipulationsmittel für die zusätzlichen Räder, wobei die Manipulationsmittel mit dem Rahmen verbunden sind und wobei die Manipulationsmittel konfiguriert sind, um die zusätzlichen Räder zwischen einer passiven Position, in der die entsprechenden zusätzlichen Räder frei von den Rädern sind und, gesehen in Querrichtung des Landwirtschaftsfahrzeugs, wenigstens größtenteils innerhalb der Nennfahrzeugbreite positioniert sind, und einer aktiven Position zu bewegen, in der jedes der zusätzlichen Räder über die Kopplungsmittel in der Zwillingsradkonfiguration mit einem zugehörigen Rad gekoppelt ist.

2. Landwirtschaftsfahrzeug nach Anspruch 1, wobei die Manipulationsmittel konfiguriert sind, um die zusätzlichen Räder in einer automatisierten Weise zwischen der passiven Position und der aktiven Position davon zu bewegen.

3. Landwirtschaftsfahrzeug nach Anspruch 1 oder 2, wobei die zusätzlichen Räder in der passiven Position von den Manipulationsmitteln gesperrt sind.

4. Landwirtschaftsfahrzeug nach einem der vorherigen Ansprüche, wobei die zusätzlichen Räder von den Manipulationsmitteln wenigstens in der aktiven Position gelöst werden können.

5. Landwirtschaftsfahrzeug nach einem der vorherigen Ansprüche, wobei die Manipulationsmittel mit dem Rahmen an der Rückseite des Landwirtschaftsfahrzeugs zwischen den Rädern verbunden sind.

6. Landwirtschaftsfahrzeug nach einem der vorherigen Ansprüche, wobei die Manipulationsmittel konfiguriert sind, um die zusätzlichen Räder in der passiven Position der zusätzlichen Räder höher als die Räder, vorzugsweise in ihrer Gesamtheit, zu positionieren.

7. Landwirtschaftsfahrzeug nach einem der vorherigen Ansprüche, umfassend eine Fahrerkabine, wobei die Manipulationsmittel konfiguriert sind, um die zusätzlichen Räder in der passiven Position der zusätzlichen Räder hinter, vorzugsweise direkt hinter, der Fahrerkabine zu positionieren.

8. Landwirtschaftsfahrzeug nach einem der vorherigen Ansprüche, wobei die Manipulationsmittel konfiguriert sind, um die zusätzlichen Räder über eine Schwenkbewegung von der passiven Position in die aktive Position davon zu bewegen, wobei die Manipulationsmittel vorzugsweise konfiguriert sind, um die zusätzlichen Räder von der passiven Position in die aktive Position davon über eine Schwenkbewegung durch einen Schwenkbereich von zwischen 135 Grad und 200 Grad, weiter vorzugsweise etwa 180 Grad, zu bewegen, wobei sich die Schwenkachse vorzugsweise in einer vertikalen Ebene parallel zu der Längsrichtung des Fahrzeugs erstreckt.

9. Landwirtschaftsfahrzeug nach einem der vorherigen Ansprüche, wobei die Manipulationsmittel ein linkes Manipulationselement zum Manipulieren eines linken zusätzlichen Rades der zusätzlichen Räder zum Koppeln des genannten Rades an ein linkes Rad der Räder des Landwirtschaftsfahrzeugs in einer Zwillingsradkonfiguration und ein rechtes Manipulationselement zum Manipulieren eines rechten zusätzlichen Rades der zusätzlichen Räder zum Koppeln des genannten Rades an ein rechtes Rad der Räder des Landwirtschaftsfahrzeugs in einer Zwillingsradkonfiguration umfassen.

10. Landwirtschaftsfahrzeug nach Anspruch 9, wobei das linke Manipulationselement und das rechte Manipulationselement jeweils einen ersten Arm, der starr mit dem Rahmen verbunden ist, und einen schwenkbaren zweiten Arm umfassen, wobei der zweite Arm an einem ersten Ende davon über ein Gelenk mit einem freien Ende des ersten Arms verbunden ist und wobei der zweite Arm an einem zweiten Ende davon ein Kopplungselement aufweist, um an das zugehörige zusätzlichen Rad gekoppelt zu werden.

11. Landwirtschaftsfahrzeug nach Anspruch 10, wobei sich das freie Ende des ersten Arms jedes des ersten und des zweiten Manipulationselements in einem Winkel über und, gesehen in der Bewegungsrichtung, hinter dem zugehörigen Rad befindet, und wobei der zweite Arm im Wesentlichen L-förmig ist und im Wesentlichen der Kontur des zugehörigen zusätzlichen Rads entlang der Außenseite und der Lauffläche davon folgt.

12. Landwirtschaftsfahrzeug nach einem der vorherigen Ansprüche, wobei der Antriebsmotor ein Verbrennungsmotor ist.

13. Landwirtschaftsfahrzeug nach einem der vorherigen Ansprüche, wobei die Räder Hinterräder des Landwirtschaftsfahrzeug bilden, wobei das Landwirtschaftsfahrzeug ferner nicht angetriebene, lenkbare Vorderräder umfasst.

14. Verfahren zur Verwendung eines Landwirtschaftsfahrzeug nach einem oder mehreren der vorherigen Ansprüche, wobei die zusätzlichen Räder von der inaktiven Position in die aktive Position davon unter Verwendung der Manipulationsmittel in einem ersten Verwendungsmodus des Landwirtschaftsfahrzeug bewegt werden, um somit die Zwillingsradkonfiguration mit den Rädern zu realisieren, wonach die zusätzlichen Räder unter Verwendung der Kopplungsmittel mit den Rädern gekoppelt werden, und wobei in einem nachfolgenden zweiten Verwendungsmodus die Kopplung über die Kopplungsmittel zwischen den zusätzlichen Rädern und den Rädern gelöst wird, woraufhin die zusätzlichen Räder unter Verwendung der Manipulationsmittel von der aktiven Position in die passive Position bewegt werden.

15. Verfahren nach Anspruch 14, umfassend den während des ersten Verwendungsmodus durchzuführenden Schritt des Trennens der Manipulationsmittel von den zusätzlichen Rädern, sobald die zusätzlichen Räder wirkend mit den Rädern verbunden sind, und des Zurückführens der Manipulationsmittel in die Position, in der die zusätzlichen Räder die inaktive Position davon einnehmen würden, wenn sie weiterhin mit den Manipulationsmitteln verbunden wären.

## Revendications

1. Véhicule agricole motorisé comprenant un châssis, un moteur d'entraînement, des roues sur le même axe de roues, qui sont entraînées par le moteur d'entraînement en cours d'utilisation, lesquelles roues définissent une largeur nominale de véhicule entre les côtés extérieurs de celles-ci, et des roues supplémentaires pour une configuration de roues jumelées avec lesdites roues, dans laquelle configuration de roues jumelées, le véhicule agricole a une largeur de véhicule accrue par rapport à la largeur nominale de véhicule, le véhicule comprenant en outre des moyens de couplage pour coupler les roues et les roues supplémentaires associées respectives dans la configuration de roues jumelées pour être mises en rotation conjointement par le moteur d'entraînement, le véhicule agricole étant **caractérisé par**
des moyens de manipulation pour les roues supplémentaires, lesquels moyens de manipulation sont reliés au châssis et sont configurés pour déplacer les roues supplémentaires entre une position passive, dans laquelle les roues supplémentaires respectives sont dégagées des roues et sont au moins principalement positionnées dans la largeur nominale de véhicule, lorsqu'on regarde dans la direction transversale du véhicule agricole, et une position active, dans laquelle chacune des roues supplémentaires est couplée à une roue associée par l'intermédiaire des moyens de couplage dans la configuration de roues jumelées.

2. Véhicule agricole selon la revendication 1, dans lequel les moyens de manipulation sont configurés pour déplacer les roues supplémentaires entre la position passive et la position active de celles-ci de manière automatisée.

3. Véhicule agricole selon la revendication 1 ou 2, dans lequel les roues supplémentaires sont suspendues aux moyens de manipulation dans la position passive.

4. Véhicule agricole selon l'une quelconque des revendications précédentes, dans lequel les roues supplémentaires peuvent être détachées des moyens de manipulation au moins dans la position active.

5. Véhicule agricole selon l'une quelconque des revendications précédentes, dans lequel les moyens de manipulation sont reliés au châssis sur le côté arrière du véhicule agricole, entre les roues.

6. Véhicule agricole selon l'une quelconque des revendications précédentes, dans lequel les moyens de manipulation sont configurés pour positionner les roues supplémentaires plus haut que les roues, de préférence dans leur ensemble, dans la position passive des roues supplémentaires.

7. Véhicule agricole selon l'une quelconque des revendications précédentes, comprenant une cabine de conduite, dans lequel les moyens de manipulation sont configurés pour positionner les roues supplémentaires derrière, de préférence directement derrière, la cabine de conduite dans la position passive des roues supplémentaires.

8. Véhicule agricole selon l'une quelconque des revendications précédentes, dans lequel les moyens de manipulation sont configurés pour déplacer les roues supplémentaires de la position passive à la position active de celles-ci, par l'intermédiaire d'un mouvement de pivotement, dans lequel les moyens de manipulation sont de préférence configurés pour déplacer les roues supplémentaires de la position passive à la position active de celles-ci par l'intermédiaire d'un mouvement de pivotement à travers une plage de pivotement comprise entre 135 degrés et 200 degrés, encore de préférence d'environ 180 degrés, dans lequel l'axe de pivotement s'étend de préférence dans un plan vertical parallèle à la direction longitudinale du véhicule.

9. Véhicule agricole selon l'une quelconque des revendications précédentes, dans lequel les moyens de manipulation comprennent un élément de manipulation gauche pour manipuler une roue supplémentaire gauche des roues supplémentaires afin de coupler ladite roue à une roue gauche des roues du véhicule agricole dans une configuration de roues jumelées, et un élément de manipulation droit pour manipuler une roue supplémentaire droite des roues supplémentaires afin de coupler ladite roue à une roue droite des roues du véhicule agricole dans une configuration de roues jumelées.

10. Véhicule agricole selon la revendication 9, dans lequel l'élément de manipulation gauche et l'élément de manipulation droit comprennent chacun un premier bras qui est relié rigidement au châssis et un deuxième bras pivotant, lequel deuxième bras est relié à une première extrémité de celui-ci à une extrémité libre du premier bras par l'intermédiaire d'une charnière, et qui comprend un élément de couplage à une deuxième extrémité de celui-ci pour être couplé à la roue supplémentaire associée.

11. Véhicule agricole selon la revendication 10, dans lequel l'extrémité libre du premier bras de chacun des premier et deuxième éléments de manipulation est située selon un angle au-dessus et en arrière de la roue associée, lorsqu'on regarde dans la direction de mouvement, et dans lequel le deuxième bras est essentiellement en forme de L et suit essentiellement le contour de la roue supplémentaire associée le long du côté externe et sa bande de roulement.

12. Véhicule agricole selon l'une quelconque des revendications précédentes, dans lequel le moteur d'entraînement est un moteur à combustion.

13. Véhicule agricole selon l'une quelconque des revendications précédentes, dans lequel les roues forment des roues arrière du véhicule agricole, le véhicule agricole comprenant en outre des roues avant orientables non entraînées.

14. Procédé d'utilisation d'un véhicule agricole selon l'une ou plusieurs des revendications précédentes, dans lequel les roues supplémentaires sont déplacées de la position inactive vers la position active de celles-ci, en utilisant les moyens de manipulation, dans un premier mode d'utilisation du véhicule agricole de manière à réaliser ainsi la configuration de roues jumelées avec les roues, après quoi les roues supplémentaires sont couplées aux roues en utilisant les moyens de couplage, et dans lequel dans un deuxième mode d'utilisation suivant, le couplage via les moyens de couplage entre les roues supplémentaires et les roues est libéré, après quoi les roues supplémentaires sont déplacées de la position active à la position passive en utilisant les moyens de manipulation.

15. Procédé selon la revendication 14, comprenant l'étape, pendant le premier mode d'utilisation, de découplage des moyens de manipulation des roues supplémentaires une fois que les roues supplémentaires sont reliées de manière fonctionnelle aux roues et de retour des moyens de manipulation à la position dans laquelle les roues supplémentaires occuperaient la position inactive de celles-ci si elles étaient toujours reliées aux moyens de manipulation.
